Europäisches Patentamt

(19) **European Patent Office**

**Office européen des brevets**

(11) Veröffentlichungsnummer: **0 053 668**
**B1**

(12) **EUROPÄISCHE PATENTSCHRIFT**

(45) Veröffentlichungstag der Patentschrift:
**30.05.84**

(21) Anmeldenummer: **81108065.4**

(22) Anmeldetag: **08.10.81**

(51) Int. Cl.³: **C 08 F 210/02**

(54) **Emulgierbare Hartwachse aus Copolymerisaten des Äthylens mit ungesättigten Carbonsäuren.**

(30) Priorität: **26.11.80 DE 3044519**

(43) Veröffentlichungstag der Anmeldung:
**16.06.82 Patentblatt 82/24**

(45) Bekanntmachung des Hinweises auf die Patenterteilung:
**30.05.84 Patentblatt 84/22**

(84) Benannte Vertragsstaaten:
**AT BE CH DE FR GB IT LI NL SE**

(56) Entgegenhaltungen:
**DE - A - 1 520 479**
**DE - A - 1 645 640**

(73) Patentinhaber: **BASF Aktiengesellschaft,
Carl-Bosch-Strasse 38, D-6700 Ludwigshafen (DE)**

(72) Erfinder: **Oeder, Dieter, Dr., Am Wingertsberg 18,
D-6718 Weisenheim (DE)**
Erfinder: **Dietsche, Wolfram, Dr.,
Albrecht-Duerer-Ring 34B, D-6710 Frankenthal (DE)**
Erfinder: **Weiss, Stefan, Dr., Carl-Beck-Strasse 46,
D-6903 Neckargemuend (DE)**
Erfinder: **Ziegler, Walter, Dr., Starenweg 15,
D-6803 Edingen-Neckarhausen (DE)**
Erfinder: **Kueppers, Peter, Carl-Bosch-Ring 2,
D-6710 Frankenthal (DE)**
Erfinder: **Hettche, Albert, Dr., Kleiststrasse 12,
D-6711 Hessheim (DE)**

## Beschreibung

Die Erfindung betrifft in Wasser emulgierbare Hartwachse mit relativ geringen Säurezahlen und hohen Schmelzviskositäten, die aus durch Hochdruckpolymerisation hergestellten Copolymerisaten des Äthylens mit olefinisch ungesättigten Carbonsäuren bestehen.

Äthylen/Acrylsäure-Copolymerisate und ihre Verwendung als emulgierbare Wachse sind aus der Literatur bekannt. Die GB-PS 929 643 beschreibt die Herstellung von solchen Wachsen bei Polymerisationstemperaturen von 50 bis 250°C und bei Drücken von 100 bis 2000 bar in Gegenwart von radikalbildenden Initiatoren und von organischen Lösungsmitteln in diskontinuierlicher Fahrweise.

Aus der DE-AS 17 20 232 ist ein kontinuierliches Verfahren bekannt, bei dem homogene Copolymerisate erhalten werden. Auch hier arbeitet man bei ca. 100 bis 300°C, jedoch bei Drücken von höchstens 150 bar.

In beiden Fällen erhält man Wachse mit Schmelzviskositäten von 100 bis 1200 mPas bei 120°C. Diese Wachse weisen ausserdem bei ausreichendem Emulgierverhalten Säurezahlen von > 45, meistens sogar > 80 auf.

Demgegenüber weisen die ebenfalls als emulgierbare Synthesewachse bekannten Schmelzoxidate des Polyäthylens, wie sie beispielsweise aus den DE-PSen 11 80 31, 12 37 783 oder der FR-PS 1 343 962 bekannt sind, Säurezahlen von nur ca. 15 bis 20 – bei sonst gleich gutem Emulgierverhalten – auf.

Die Äthylen-Copolymerisatwachse mussten daher, damit sie gut emulgierbar werden, mit den erwähnten relativ hohen Säurezahlen hergestellt werden. Dadurch sind aber Wachse dieses Typs schon derart hydrophil – besonders wenn sie noch zusätzlich neutralisiert sind –, dass sie häufig in wesentlich grösserer Menge (in Wasser emulgiert) eingesetzt werden müssen, um die gewünschte wasserabweisende Wirkung zu bekommen.

Andererseits bestand aber schon lange in der Technik das Bedürfnis, gerade die Copolymerisat-Wachse zu verwenden, da diese gegenüber den Polyäthylenoxidaten thermisch stabiler sowie einheitlich aufgebaut sind – sie enthalten ausschliesslich Carboxylgruppen als polare Gruppen und nicht zusätzlich noch Carbonyl- und Peroxigruppen, die insbesondere im alkalischen Medium zu Umlagerungen neigen –, wodurch diese Wachse im allgemeinen auch bei höheren Temperaturen farblos und geruchfrei bleiben.

Generell sollen Wachse, wenn sie zur Bildung von Filmen herangezogen werden, nicht nur harte, sondern auch zähe, kratzfeste und nicht klebende Überzüge ergeben.

Das Ziel der vorliegenden Erfindung bestand somit darin, wachsartige Copolymerisate aufzufinden, die neben Farb- und Geruchlosigkeit, im Film Zähigkeit, Kratzfestigkeit und Nicht-Klebrigkeit vor allem ein gutes Emulgierverhalten auch bei niedrigen Säurezahlen zeigen.

Dieses Ziel wurde mit Äthylen-Copolymerisaten erreicht, wie sie gemäss den Patentansprüchen definiert sind.

Die Copolymerisate des Äthylens enthalten 1 bis 8, vorzugsweise 2 bis 6 Gew.% an Einheiten der α-olefinisch ungesättigten Carbonsäuren. Technisch von besonderem Interesse sind Gehalte von 2,5 bis 5 Gew.% an den ungesättigten Säuren. Von diesen Säuren, die erfindungsgemäss 3 bis 8 C-Atome enthalten, seien z.B. Acrylsäure, Methacrylsäure, Crotonsäure, Maleinsäure, Fumarsäure und Itaconsäure genannt. Technisch bevorzugt sind Acrylsäure und Methacrylsäure.

Die Copolymerisate besitzen Schmelzindices von 1500 bis 20 MFI-Einheiten – gemessen bei 160°C und 325 g Belastung.

«MFI» bedeutet «Melt Flow Index». Er ist proportional zur Menge der Polymerisat-Schmelze in Gramm gemessen, die bei einer bestimmten Temperatur durch eine Düse von bestimmten Abmessungen bei einem bestimmten Kraftaufwand (Belastung) gedrückt werden kann. Der Bestimmung der Schmelzindices (MFI-Einheiten) sind die folgenden Normen zugrunde gelegt:

ASTM D 1238-65 T
ISO R 1133-1969 (E)
DIN 53 735 (1970)

Vorzugsweise beträgt der Schmelzindex 1000 bis 50 MFI-Einheiten.

Die Höppler-Härte beträgt 400 bis 800 bar, gemessen bei 23°C (DGF-Einheitsmethode-M III 9a (57)), vorzugsweise 450 bis 650 bar.

Die Säurezahlen liegen bei 10 bis 60, vorzugsweise 20 bis 35, d.h. wesentlich niedriger als bei den bisher empfohlenen niedriger viskosen Copolymerisat-Wachsen.

Bei den vergleichbaren Wachsen des Standes der Technik waren wesentlich höhere Säurezahlen erforderlich, um rahm-, stippenfreie und transparente Emulsionen herzustellen, wie unsere weiter unten angegebenen Versuchsergebnisse zeigen.

Die Herstellung der Wachse erfolgt in an sich bekannter Weise durch kontinuierliche Hochdruckcopolymerisation von Äthylen mit den ungesättigten Carbonsäuren in Gegenwart von radikalbildenden Initiatoren. Die Polymerisation findet bei Temperaturen von 150 bis 300°C und Drücken von 1000 bis 3000 bar statt. Das Gewichtsverhältnis Äthylen zu ungesättigter Carbonsäure liegt bei 500:1 bis 20:1; im Ansatz sind – bezogen auf die Summe der Monomeren – 0,01 bis 5 Gew.% an Reglern anwesend.

Als Regler setzt man allgemein übliche Substanzen, die diese Funktion ausüben, ein. Hierzu gehören z.B. aliphatische Aldehyde mit 3 bis 6 C-Atomen, wie Propionaldehyd oder n-Butyraldehyd, aliphatische Ketone mit 3 bis 6 C-Atomen, wie Aceton oder Methylethylketon, α-Olefine mit 3 bis 6 C-Atomen, wie Propen, 1-Buten oder 1-Penten, oder $C_3$- bis $C_6$-Alkane, wie Propan, n-Butan oder n-Pentan. Bevorzugt werden aliphatische Aldehyde, wie Propionaldehyd oder n-Butyraldehyd, eingesetzt.

Kontinuierlich werden 3 bis 25 Gew.% des Äthylens umgesetzt und das gebildete Polymerisat kontinuierlich aus der Reaktionszone entfernt.

Die Polymerisation findet in einphasigem Polymerisationsmilieu statt, wobei das im überkritischen Zustand vorliegende Äthylen als Lösungsmittel für das Reaktionsgemisch und die Polymerschmelze dient. Ein zusätzliches Lösungsmittel, wie es in der DE-AS 17 20 232 für die Herstellung von Äthylen-Acrylsäure-Wachsen beschrieben wird, setzt man nicht ein.

Wichtig bei der Herstellung der Hartwachse ist die richtige Dosierung von Acrylsäure, Reglern und Initiatoren, da sonst Nachteile, wie zu hohes Molgewicht, schlechtes Emulgierverhalten, niedrigere Härte und somit schlechtere Filmeigenschaften eintreten.

Ein auf den ersten Blick sehr ähnliches Verfahren ist aus der DE-AS 15 20 497 bekannt. Dieses Verfahren arbeitet ebenfalls kontinuierlich, doch ohne Zusatz von Reglern und vorzugsweise in Gegenwart von Lösungsmitteln wie Benzol. Hierbei erhält man aber Produkte mit Klebeeigenschaften, die sich z.B. als Faserbindemittel eignen, d.h. Stoffe, die nicht als Hartwachse, die klebefreie Filme ergeben sollen, tauglich sind.

Es war also überraschend, dass man bei einem ähnlichen chemischen Prozess Produkte mit so unterschiedlichen anwendungstechnischen Eigenschaften herstellen kann.

Die Produkte wurden erhalten durch kontinuierliche Copolymerisation von Äthylen und α,β-äthylenisch ungesättigten Säuren mit 2 bis 8 Kohlenstoffatomen im Molekül, bei hohen Äthylendrücken von 1000–3000 bar und bei Temperaturen von 150 bis 300°C. Die Polymerisation erfolgt im einphasigen Polymerisationsmedium mit Äthylenumsätzen von max. 25%, wobei das im überkritischen Zustand vorliegende Äthylen als Lösungsmittel für das Reaktionsgemisch und die Polymerschmelze dient. Ein zusätzliches Lösungsmittel, wie in der DP-AS 1 720 232 für die Herstellung von Äthylenmethacrylsäure-Wachsen beschrieben, wird nicht verwendet. Die Dosierung der α,β-äthylenisch ungesättigten Säuren und des verwendeten radikalischen Polymerisationsstarters in das Reaktionsgemisch muss getrennt erfolgen. Die Dosierung der für die Einstellung des Molekulargewichts erforderlichen Regler kann zusammen mit den Comonomeren bzw. dem radikalischen Starter erfolgen.

Die Erfindung soll nun durch die Beispiele näher belegt werden, ohne dass hierdurch die Erfindung eingeschränkt wird.

Beispiel 1

Eine Mischung von 318 kg/h Äthylen, 1,9 kg/h Acrylsäure und 0,71 kg/h Propionaldehyd (Temperatur des Gemisches: 35°C) wird kontinuierlich durch einen auf einem Druck von 2300 bar gehaltenen 15-l-Rührautoklaven geleitet. Durch die kontinuierliche Zugabe von 23,5 g/h tert.-Butylperisononanat TBIN (in der Regel in einem geeigneten Lösungsmittel) wird die Temperatur im Autoklaven bei 240°C gehalten. Das nach Entspannung des Reaktionsgemisches in einer Menge von 54,5 kg/h anfallende Polymerisat entspricht einem Umsatz von 17,1% (bezogen auf den Äthylen-Durchsatz). Es enthält 3,1 Gew.% Acrylsäure und hat einen Schmelzindex (MFI 160/325) von 260. Die Höppler-Härte beträgt 600 bar, der Erstarrungspunkt 98°C, die Jodfarbzahl 30 Minuten in der Schmelze bei 150°C gemessen 1.

Die folgenden Beispiele 2 bis 14 sind vom Ablauf her entsprechend Beispiel 1 durchgeführt, die unterschiedlichen Herstell-Bedingungen und die Produktparameter sind in Tabelle I zusammengefasst.

Tabelle I

| Bsp. Nr. | Druck bar | Tmax °C | Tgem [°C] | Äthylen-Durch-satz kg/h | AS*-Dosie-rung kg/h | PA*-Dosie-rung kg/h | TBIN-Dosie-rung g/h | Aus-stoss kg/h | Um-satz % | AS-Ge-halt Gew.% | Schmelz-index [MFI] 160/325 | Härte/ bar 23°C | Jod-farb-zahl | Erstar-rungs-punkt °C |
|---|---|---|---|---|---|---|---|---|---|---|---|---|---|---|
| 2 | 2200 | 220 | 35 | 305 | 1,5 | 0,78 | 13,4 | 47,1 | 15,4 | 2,9 | 200 | 620 | 1 | 102 |
| 3 | 2200 | 219 | 35 | 295 | 2,0 | 0,75 | 13,7 | 45,8 | 15,5 | 3,9 | 220 | 630 | 1 | 100 |
| 4 | 2300 | 240 | 35 | 307 | 1,7 | 0,25 | 14,0 | 53,0 | 17,3 | 2,9 | 57 | 570 | 1 | 100 |
| 5 | 2300 | 240 | 35 | 288 | 2,4 | 0,48 | 19,8 | 50,0 | 17,4 | 4,2 | 187 | 480 | 1 | 98 |
| 6 | 2300 | 220 | 35 | 268 | 1,9 | 0,74 | 9,5 | 43,0 | 16,0 | 4,0 | 252 | 580 | 1 | 100 |
| 7 | 2200 | 219 | 35 | 290 | 2,5 | 0,82 | 14,2 | 45,4 | 15,7 | 4,9 | 205 | 610 | 1 | 99 |
| 8 | 2200 | 219 | 35 | 308 | 1,6 | 1,55 | 13,5 | 47,4 | 15,4 | 3,1 | 970 | 400 | 1 | 96 |
| 9 | 2200 | 219 | 35 | 305 | 2,3 | 1,43 | 13,8 | 47,5 | 15,6 | 4,3 | 1000 | 480 | 1 | 98 |
| 10 | 2300 | 221 | 35 | 296 | 1,7 | 0,47 | 12,4 | 46,1 | 15,6 | 3,4 | 22 | 550 | 1 | nicht be-stimm-bar |
| 11 | 2300 | 220 | 35 | 288 | 1,8 | 0,87 | 12,7 | 44,8 | 15,5 | 3,6 | 264 | 650 | 1 | 99 |
| 12 | 2300 | 220 | 35 | 305 | 20 | 0,77 | 11,5 | 47,5 | 15,6 | 3,8 | 160 | 630 | 1 | 99 |

* AS = Acrylsäure      PA = Propionaldehyd

Die in den Versuchen 1–12 hergestellten Wachsproben wurden unter Verwendung von nichtionischen Emulgatoren, wie Alkoholäthoxylate oder Alkylphenoläthoxylate, in Gegenwart von Alkali zu hochtransparenten Emulsionen emulgiert.

Einzelheiten werden durch die folgenden Beispiele belegt.

## Beispiel 13

Zur Emulgierung des in Beispiel 1 beschriebenen Wachsgranulates wurden 20 Teile Wachs, 4 Teile eines nichtionischen Emulgators*, 0,3 Teile Kaliumhydroxid, 0,72 Teile Äthylenglykol und 30 Teile Wasser bei 130–140°C unter Druck (5–6 bar) zu einer homogenen Schmelze verrührt. Anschliessend wurden unter Rühren 44 Teile Restwasser zugefahren. 15 Minuten wurde nachgerührt. Die Wachsemulsion wurde nun zügig abgekühlt, optimal ist das Herausfahren der unter Druck stehenden Emulsion über einen Intensivkühler. Abgekühlt auf Raumtemperatur erhält man eine stippenfreie Wachsemulsion.

Sie zeigt in 1%iger Verdünnung in einer 1-cm-Zelle eine Lichtdurchlässigkeit von 66%. Nach 2 Monaten Standzeit ist die Emulsion noch frei von irgendwelchen Aufrahmungen. Aufstriche auf der Glasplatte verfilmen bei Zimmertemperatur zu stippenfreien klaren glänzenden zähen nichtklebenden Filmen, wie sie für den Pflegemittelbereich erwünscht sind.

*Alkylphenoläthoxylat mit 8–10 Äthylenoxid (EO),
$C_9C_{11}$-geradkettige oder verzweigte Fettalkohole mit 7 EO oder
$C_{13}C_{15}$-geradkettige oder verzweigte Fettalkohole mit 10 EO.

## Beispiel 14

Zur Emulgierung des in Beispiel 2 beschriebenen Wachsgranulates wurden in einem Druckautoklaven mit Propellerrührer 25 Teile Wachs, 4,5 Teile eines Alkylphenoläthoxylates mit 9 EO, 0,375 Teile Kaliumhydroxid, 0,9 Teile Äthylenglykol und 28 Teile Wasser vorgelegt. Die Mischung wurde unter Rühren auf 120–140°C erhitzt, nachdem die Komponenten zu einer homogenen Schmelze zusammengerührt waren, wurden noch 41 Teile Wasser unter Druck zugegeben. Es wurde noch einmal auf 130°C aufgeheizt, 10–20 Minuten wurde nachgerührt und dann unter wenigem Rühren schnell auf Raumtemperatur abgekühlt.

Es wurde eine Wachsemulsion erhalten, die stippenfrei war und in 1%iger Verdünnung eine Lichtdurchlässigkeit von 60% zeigte. Auch nach 2 Monaten Lagerzeit konnte keine Aufrahmung der Emulsion beobachtet werden. Aufstriche auf der Glasplatte ergaben stippenfreie und klar auftrocknende, zähe, glänzende und klebefreie Filme.

## Beispiel 15

Im 1-l-Druckautoklaven mit Propellerrührer wurden vorgelegt 20 Teile Wachs entsprechend Beispiel 4, 4 Teile mit 7 EO alkoxylierter Isodecylalkohol, 0,3 Teile Kaliumhydroxid, 1 Teil Diäthyläthanolamin und 30 Teile Wasser und bei 120–130°C unter Eigendruck zu einer Schmelze verrührt. Anschliessend werden unter Druck 45 Teile Wasser zugegeben. Es wird kurz nachgerührt, dann unter mässigem Rühren auf 40°C abgekühlt.

Es wurde eine Wachsemulsion erhalten, die stippenfrei war und einen Lichtdurchlässigkeitswert von 63% zeigte.

Nach 2 Monaten Lagerzeit konnte noch keine Aufrahmung festgestellt werden. Aufstriche auf Glasplatten ergaben stippenfreie und klar auftrocknende, zähe, glänzende und klebefreie Filme.

## Beispiel 16

Im 1-l-Druckautoklaven wurden vorgelegt 160 Teile Wachs aus Beispiel 10, 40 Teile alkoxylierter Decylalkohol mit 7 EO, 3,5 Teile Kaliumhydroxid, 1,5 Teile Natriumbisulfit und 175 Teile Wasser und bei 130°C zu einer homogenen Schmelze verrührt. Anschliessend wurden noch 263 Teile Wasser unter Druck zugegeben. Es wird 15 Minuten nachgerührt und dann auf 40°C abgekühlt.

Es wurde eine hochtransparente Emulsion mit einer Lichtdurchlässigkeit von 85% erhalten. Sie ist lagerstabil, nach 2 Monaten konnte keine Aufrahmung beobachtet werden. Aufstriche auf der Glasplatte ergaben stippenfreie und klar auftrocknende, zähe, glänzende und klebefreie Filme.

Entsprechend Beispiel 13 wurden noch weitere erfindungsgemässe Wachse emulgiert, die Ergebnisse sind in Tabelle II dargestellt.

Tabelle II

| Bsp. | Wachs Bsp.Nr. | Lichtdurch lässigkeit der Emulsion | Stabilität und Filmeigenschaften der Wachsemulsion |
|---|---|---|---|
| 17 | 3 | 65% | keine Aufrahmung nach 8 Wochen Lagerung; klarer, glänzender, zäher, nicht klebender Film |
| 18 | 8 | 58% | wie Beispiel 17 |
| 19 | 11 | 62% | wie Beispiel 17 |
| 20 | 7 | 70% | wie Beispiel 17 |

In Tabelle III sind entsprechend der Emulgiervorschrift von Beispiel 1 einige niedrigmolekulare Wachse vom Stand der Technik emulgiert.

Tabelle III

| Bsp. | Wachstyp | MFI 325 g/ 160°C | AS/% | Lichtdurch lässigkeit der Emulsion/% | Stabilität und Filmeigenschaft der Emulsion |
|------|----------|------------------|------|-------------------------------------|---------------------------------------------|
| 21 | Marktstandard | 4500 | 5,5 | 52% | rahmhaltige Emulsion/Verstärkung nach 8 Wochen, Film eine Spur klebrig |
| 22 | Marktprodukt | 6500 | 6 | 65% | stippenfreie Emulsion, zunehmend klebriger Film mit höherem AS-Gehalt |
| 23 | Hergestelltes Wachs nach Bsp. 1, jedoch niedermolekular | 10.250 | 3,4 | 3% | stippige, trübe Emulsion, die nach 1 Tag stark aufrahmt |
| 24 | Wachs entsprechend Bsp. 1, jedoch niedermolekular | 4750 | 2,9 | 0% | Emulsion trennt sich sofort |

Die Anwendungsgebiete der erfindungsgemässen Wachse liegen allgemein im chemisch-technischen Bereich, in der Textilindustrie, der Kunststoffverarbeitung und insbesondere im Pflegemittelbereich. In Primärdispersionen vom Styrol/Acrylsäure/Acrylat-Typ führen die Wachsemulsionen bei Zugabe von 1–40% auf Linoleum oder PVC-Bodenbelag zu hochglänzenden und kratzfesten Filmen mit deutlichen Vorteilen zu Produkten vom Stand der Technik.

Die folgenden Beispiele sollen diesen Effekt belegen, ohne die Erfindung einzuschränken.

Allgemeine Versuchsdurchführung

60 Teile der erfindungsgemässen Wachsemulsion, 10 Teile einer Primärdispersion aus Styrol/Acrylsäure/Acrylat-Basis, 17 Teile Wasser, 13 Teile einer 15%igen Netzharzlösung, 0,3 Teile Tributoxyäthylphosphat, 0,2 Teile Tributylphosphat, 1 Teil Fluortensid.

Die Pflegemittelmischung wird mit einem feinhaarigen Pinsel auf einen Standard-PVC-Fussbodenbelag aufgetragen. Bei Zimmertemperatur verfilmt die Emulsion zu einem glänzenden, zähen Pflegemittelfilm, dessen Glanz mit Hilfe des Universal Reflektometers von Dr. Lange mit 85° Messkopf bestimmt wird. Geeicht wird auf schwarzer Platte auf Glanzzahl 50.

Die Kratzfestigkeit, Zähigkeit und Anschmutzbarkeit des Filmes wird durch Auftrag eines Filmes auf weisses PVC und Aufbringen von schwarzen Absatzstrichen geprüft. Beurteilt wird die Aufnahme von schwarzem Absatzgummi und das Aufreissen des Filmes. 1 bedeutet keine Aufnahme von schwarzem Absatzgummi bzw. keine Filmverletzung, 5 bedeutet starke schwarze Absatzstriche und Aufreissen des Polymerfilmes.

Tabelle IV

| Bsp. | Emulsion aus Bsp. | Glanz 1. Aufstr. | Glanz 2. Aufstr. | Schwarz- anschmutzung | Filmverletzungen durch Absatzstriche |
|------|-------------------|------------------|------------------|-----------------------|--------------------------------------|
| 25 | 13 | 21 | 40 | 2 | 1 |
| 26 | 14 | 20 | 38 | 2 | 1 |
| 27 | 17 | 19 | 39 | 2 | 1 |
| 28 | 18 | 17 | 36 | 2–3 | 2 |
| 29 | 16 | 20 | 40 | 2 | 1 |

Tabelle V
Vergleichsversuche

| Bsp. | Emulsion aus Bsp. | Glanz 1. Aufstr. | Glanz 2. Aufstr. | Schwarz- anschmutzung | Filmverletzungen durch Absatzstriche |
|------|-------------------|------------------|------------------|-----------------------|--------------------------------------|
| 30 | 21 | 15 | 30 | 3 | 3 |
| 31 | 22 | 14 | 28 | 3–4 | 3 |
| 32 | Emulsion von oxidiertem PE-Wachs-Marktstandard | 12 | 27 | 4 | 3 |

## Patentansprüche

1. In Wasser emulgierbare Hartwachse, bestehend aus homogenen Copolymerisaten des Äthylens mit – bezogen auf Copolymerisat – 1 bis 8 Gew.% an $C_3$- bis $C_8$-α-olefinisch ungesättigten Carbonsäuren, gekennzeichnet durch folgende Kenndaten:

Schmelzindex = 1500 bis 20 MFI-Einheiten, gemessen bei 160°C und 325 g Belastung
Säurezahl = 10–60
Höppler-Härte = 400–800 bar, gemessen bei 23°C nach der DGF-Einheitsmethode-M-III 9a (57).

2. Hartwachse nach Anspruch 1, hergestellt durch Copolymerisation des Äthylens mit den ungesättigten Carbonsäuren in kontinuierlicher Fahrweise in Gegenwart von Radikale bildenden Initiatoren bei Temperaturen von 150 bis 300°C und Drücken von 1000 bis 3000 bar in einem Gewichtsverhältnis Äthylen zu Säure wie 500:1 bis 20:1 in einphasigem Polymerisationsmilieu, in dem die Monomeren löslich sind, und in Gegenwart von 0,01 bis 5 Gew.% – bezogen auf die Summe der Monomeren – an Reglern, wobei 3 bis 25 Gew.% des Äthylens umgesetzt und das gebildete Copolymerisat kontinuierlich aus der Reaktionszone entfernt wird.

## Revendications

1. Cires dures, émulsionnables dans l'eau, constituées de copolymères homogènes de l'éthylène et de 1 à 8% du poids du copolymère d'acides carboxyliques en $C_3$ à $C_8$ à insaturation α-oléfinique, caractérisées par les données ci-après:

indice de fusion: 1500 à 20 unités MFI, déterminées à 160°C sous une charge de 325 g;
indice d'acide: 10 à 60 et
dureté Höppler: 400 à 800 bars, dureté déterminée à 23°C selon la méthode DGF M-III 9a (57) standardisée.

2. Cires dures selon la revendication 1, préparées par une copolymérisation en continu de l'éthylène et d'acides carboxyliques non saturés dans un milieu de polymérisation mono-phase, dans lequel les monomères sont solubles, les proportions pondérales de l'éthylène et de l'acide étant dans un rapport de 500:1 à 20:1, à des températures de 150 à 300°C et sous des presions de 1000 à 3000 bars en présence d'initiateurs formant des radicaux libres et de 0,1 à 5% en poids, par rapport à la somme des poids des monomères, de régulateurs jusqu'à la transformation de 3 à 25% en poids de l'éthylène, le copolymère formé étant soutiré en continu de la zone de réaction.

## Claims

1. A water-emulsifiable hard wax, consisting of a homogeneous copolymer of ethylene with from 1 to 8% by weight, based on copolymer, of α-olefinically unsaturated $C_3$–$C_8$-carboxylic acids, and having the following characteristic data:

Melt index = 1,500 to 20 MFI units, measured at 160°C under 325 g load
Acid number = 10–60
Höppler hardness = 400–800 bar, measured at 23°C by DGF standard method M-III 9a (57).

2. A hard wax as claimed in claim 1, which has been prepared by continuous copolymerization of ethylene with the unsaturated carboxylic acids in the presence of a free radical initiator at from 150 to 300°C under a pressure of from 1,000 to 3,000 bar, using a weight ratio of ethylene to acid of from 500:1 to 20:1, in a single-phase polymerization medium in which the monomers are soluble, and in the presence of from 0.01 to 5% by weight, based on total monomers, of a regulator, from 3 to 25% by weight of ethylene being converted and the copolymer formed being removed continuously from the reaction zone.